# EUROPÄISCHE PATENTSCHRIFT

(11) **EP 3 994 515 B1**
(45) Veröffentlichungstag und Bekanntmachung des Hinweises auf die Patenterteilung: **31.07.2024**
(21) Anmeldenummer: 20739252.3
(22) Anmeldetag: 22.06.2020
(51) Int. Cl.: G02B 21/00, G02B 27/60, G02B 21/14, G02B 21/16, G02B 21/36, G01N 21/64, G01N 21/21

(54) **MIKROSKOPIEANORDNUNG UND MIKROSKOPIEVERFAHREN FÜR EINE GROSSFLÄCHIGE, HOCHAUFLÖSENDE CHIRALE BILDGEBUNG SOWIE DEREN VERWENDUNG**
MICROSCOPY ARRANGEMENT AND MICROSCOPY METHOD FOR LARGE-AREA, HIGH-RESOLUTION CHIRAL IMAGING, AND USE OF SAME
DISPOSITIF DE MICROSCOPIE ET PROCÉDÉ DE MICROSCOPIE POUR UNE IMAGERIE À GRANDE SURFACE ET CHIRALE À HAUTE RÉSOLUTION, ET LEUR UTILISATION

(30) Priorität: 03.07.2019 DE 102019118003
(43) Veröffentlichungstag der Anmeldung: 11.05.2022
(73) Patentinhaber: Leibniz-Institut für Photonische Technologien e.V., 07745 Jena (DE)
(72) Erfinder: HUANG, Jer-Shing, 07743 Jena (DE)
(74) Vertreter: Donath, Dirk
(86) Internationale Anmeldenummer: PCT/DE2020/100527
(87) Internationale Veröffentlichungsnummer: WO 2021/000991

(56) Entgegenhaltungen:
- EP-A1- 3 073 310
- EP-B1- 2 917 776
- WO-A1-2013/190058
- WO-A1-2018/015950
- DE-A1- 102008 024 954
- DE-B4- 102010 013 223
- US-A1- 2008 210 868
- US-A1- 2013 068 967
- G.-Y. ZHUO ET AL: "Three-dimensional structural imaging of starch granules by second-harmonic generation circular dichroism : SHG-CD IMAGING OF STARCH", JOURNAL OF MICROSCOPY, vol. 253, no. 3, 1 March 2014 (2014-03-01), GB, pages 183 - 190, XP055732437, ISSN: 0022-2720, DOI: 10.1111/jmi.12108

## Beschreibung

Die Erfindung betrifft eine Mikroskopieanordnung und ein Mikroskopieverfahren für eine großflächige, hochauflösende chirale Bildgebung sowie deren Verwendung gemäß der Gattung der Patentansprüche.

Chiralität beschreibt in der Stereochemie eine räumliche Anordnung von Atomen in einem Molekül, bei der einfache Symmetrieoperationen, z. B. eine Spiegelung an einer Molekülebene, nicht zu einer Selbstabbildung führen.

Hierbei können sowohl einzelne oder mehrere Atome in einem Molekül eines oder mehrere stereogene Zentren darstellen als auch die gesamte Molekülgestalt die Chiralität ausmachen. Moleküle mit dieser Eigenschaft werden dabei chiral, Moleküle ohne diese Eigenschaft achiral genannt. Chiralität ist ein griechisches Kunstwort und bedeutet "Händigkeit".

Das Konzept der Chiralität spielt auch in der Biologie, insbesondere in der Biochemie, eine fundamentale Rolle. In allen Naturstoffklassen ist jeweils ein Enantiomer bevorzugt, bzw. ausschließlich vorhanden. (https://de.wikipedia.org/wiki/Chiralit%C3 %A4t_%28Chemie%29)

Biochemische Reaktionen werden durch Enzyme katalysiert. Da es sich bei Enzymen um chirale Makromoleküle handelt, sind sie in der Lage, eine Reaktion enantioselektiv zu steuern. Dies geschieht durch einen diastereoselektiven Mechanismus, wobei von den beiden enantiomeren Übergangszuständen des Substrates derjenige bevorzugt wird, dessen Energie geringer ist, der also vom aktiven Zentrum stabilisiert wird. Dadurch können aus prochiralen und achiralen Edukten chirale Produkte synthetisiert werden. Auf diese Weise setzen sich die Bevorzugung eines Enantiomers und damit die Chiralität in der gesamten Biochemie und Physiologie fort. Chiralität ist auch die Voraussetzung für geordnete Sekundärstrukturen in Proteinen wie z. B. einer α-Helix, die nur aus enantiomerenreinen Aminosäuren aufgebaut werden kann (in der Natur L-Aminosäuren). Enantiomere chiraler Moleküle zeigen somit in der Regel unterschiedliche physiologische Wirkungen, sie haben einen unterschiedlichen Geschmack, Geruch, eine unterschiedliche Toxizität und eine unterschiedliche pharmakologische Wirkung als Arzneistoff [E. J. Ariëns: Stereochemistry, a basis for sophisticated nonsense in pharmacokinetics and clinical pharmacology, European Journal of Clinical Pharmacology 26 (1984) 663-668, doi:10.1007/BF00541922] und Hisamichi Murakami: From Racemates to Single Enantiomers - Chiral Synthetic Drugs over the last 20 Years, Topics in Current Chemistry 269 (2007) 273-299, doi:10.1007/128_2006_072].

Enantiomere haben fast alle physikalischen Eigenschaften gemeinsam. Eine physikalische Größe, in der sich Enantiomere unterscheiden, ist ihre Wechselwirkung mit linear polarisiertem Licht. Die Ebene des linear polarisierten Lichts wird beim Durchgang durch eine Lösung eines Enantiomers gedreht. Dieses Verhalten bezeichnet man als optische Aktivität. Die optische Aktivität wird mit einem Polarimeter gemessen.

Chirale Objekte mit entgegengesetzter Händigkeit interagieren auch unterschiedlich mit zirkular polarisiertem Licht (CPL), was zu zirkulärer Doppelbrechung und zirkulärem Dichroismus (CD) führt. Diese chiropischen Reaktionen liefern reichhaltige strukturelle Informationen über die chiralen Objekte und haben wichtige Anwendungen in der Biomedizin, Pharmazie und Materialwissenschaft gefunden.

Die CD-Spektroskopie misst die wellenlängen- und polarisationsabhängigen Unterschiede bei der Absorption chiraler Objekte unter zirkular polarisierter Beleuchtung und wird dazu eingesetzt, strukturelle Informationen über chiralen Objekte zu erhalten.

Die CD-Spektroskopie liefert jedoch keine räumlichen Informationen über die molekularen chiralen Domänen. Um die räumliche Verteilung der chiralen Domänen zu erhalten, gab es Versuche, eine direkte chirale Bildgebung durchzuführen.

Die derzeit verfügbaren Methoden zur Abbildung von Enantiomeren und zur direkten chiralen Bildgebung für die chirale Domänenabbildung sind:
- Direkte Weitwinkel-CD-Bildgebung,
- Scannen von konfokalen CD-Mappings,
- Chirale Kartierung (SHG),
- Chirale Kartographie der Zwei-Photonen-Lumineszenz (TPL),
- CD-Mikroskopie mit thermischer Linse (CD-TL) und
- Chirale Nahfeld-Scanning-Mikroskopie (NSOM).

Direkte Weitwinkel-CD-Bildgebung und konfokale CD-Abbildungsverfahren kombinieren CD mit optischer Mikroskopie, indem sie eine zirkular polarisierte Beleuchtung mit zeitvarianter Händigkeit einführen und das übertragene Signal erfassen. Es ist besonders darauf zu achten, dass die lineare Doppelbrechung durch die Optik des Mikroskops kompensiert wird. Typischerweise benötigen diese Methoden bis zu 10 Minuten, um ein Bild aufzunehmen, was die Anwendung von Echtzeit-Chiral-Domain-Imaging unmöglich macht.

TPL- und SHG- Chiralkartierungsverfahren basieren auf der chiralitätsverbesserten Nichtlinearität zweiter Ordnung, die geordnete mesoskopische Strukturen erfordert, z.B. durch das Stapeln von Molekülen.

Die CD-TL-Mikroskopie moduliert zeitlich die Händigkeit von zirkular polarisiertem Licht und misst die Modulation des Sondenstrahls durch thermische Linsenwirkung. Dieses Verfahren erfordert eine lange Erfassungszeit mit einem Lock-in-Verstärker. Typischerweise liegt die Dauer der Messung im Bereich von Millisekunden, abhängig von der materialabhängigen Ansprechzeit des thermischen Linseneffekts.

NSOM verwendet eine Nahfeld-Abtastsonde, um über das Nahfeld der Probe zu scannen. Durch die Erfassung der lokalen elektrischen und magnetischen Felder ist es möglich, die Informationen über die Händigkeit der chiralen Domänen an der Oberfläche zu extrahieren.

Insgesamt sind die derzeit verfügbaren Methoden entweder durch den schwachen Kontrast, die langsame Bildaufnahmegeschwindigkeit oder die schlechte räumliche Auflösung begrenzt. Darüber hinaus weisen sie einen niedrigen Durchsatz an Proben auf, was von Nachteil ist.

So ist beispielsweise der Bildkontrast bei direkter Weitwinkel-CD-Imaging und konfokaler CD-Mapping von Natur aus schlecht, da die CD schwach ist.

Das SHG-Chiralkartierungsverfahren liefert eine gute räumliche Auflösung und Selektivität, kann aber nur auf Proben mit geordneten mesoskopischen Strukturen angewendet werden, was von Nachteil ist.

Die CD-TL-Mikroskopie hat ein unbefriedigendes Signal-RauschVerhältnis und erfordert eine lange Aufnahmezeit mit einem Lock-in-Verstärker.

Konfokales CD-Mapping, Chiralkartierungsverfahren und TPL-Chiralkartierungsverfahren weisen aufgrund ihres Scan-Charakters einen sehr begrenzten Durchsatz auf.

Die chirale NSOM besitzt Subwellenlängenauflösung, ist jedoch sehr langsam und beschränkt sich auf die Probenoberfläche, wobei aber eine Hochdurchsatz-Bildgebungsmodalität für chirale Domänen mit räumlicher Auflösung im Subwellenlängenbereich erforderlich ist.

Für das direkte Weitwinkel-CD-Imaging und das Scannen konfokaler CD-Mapping-Methoden gibt es eine beugungsbegrenzte Auflösung. Es ist besonders darauf zu achten, dass die lineare Doppelbrechung durch die Optik des Mikroskops kompensiert wird. CD-Imaging und CD-Mapping weisen einen schwachen Kontrast auf und bieten daher eine schlechte räumliche Auflösung und erfordern eine lange Aufnahmezeit. SHG- oder TPL-Chiralmapping ist nur für Proben anwendbar, die geordnete mesoskopische Strukturen wie Stärke oder Kollagen enthalten. Außerdem ist die Signalintensität schwächer als bei der linearen Methode und der Durchsatz ist aufgrund der Abtastcharakteristik gering.

Die CD-TL-Mikroskopie moduliert zeitlich die Händigkeit von CPL und misst die Modulation des Sondenstrahles aufgrund der thermischen Linsenwirkung. Dieses Verfahren hat ein schlechtes Signal-RauschVerhältnis (s/n) und erfordert eine lange Erfassungszeit mit einem Lock-in-Verstärker. Typischerweise liegt die Erfassung im Bereich von Millisekunden, abhängig von der materialabhängigen Ansprechzeit des thermischen Linseneffekts.

Aufgrund des schwachen Unterschieds in der Absorption sind Hunderte bis Tausende von Zyklen der Wechselerregung erforderlich, um einen zufriedenstellenden Kontrast zu erhalten. Daher ist die CD-TL-Methode durch die langsame Erfassungsgeschwindigkeit begrenzt.

Wie bei chiralem NSOM macht die Scan-Natur das NSOM sehr langsam und ist nur für die Oberflächencharakterisierung nützlich. Darüber hinaus ist auch der Grad der zirkulären Polarisation des Nahfeldes nicht einfach zu kontrollieren. Daher erfordert die chirale NSOM-Kartierung komplexe Instrumente und erfahrene Anwender für den Betrieb des Systems. Insgesamt ist NSOM aufgrund des langsamen Scannens und der begrenzten Möglichkeiten der dreidimensionalen Bildgebung nicht für eine schnelle Bildgebung geeignet.

Die räumliche Auflösung eines typischen Lichtmikroskops wird durch die erfassbare Bandbreite der durch das Erfassungsziel bestimmten Ortsfrequenz begrenzt. Um die räumliche Auflösung zu verbessern, wird bei dem Verfahren der strukturierten Beleuchtungsmikroskopie (SIM) räumlich strukturiertes Licht verwendet, um die Probe zu beleuchten. Die Überlagerung des Beleuchtungsmusters und der Probenverteilung führt zum sogenannten Moirè-Effekt, der die hochfrequenten Komponenten (die für feine Merkmale verantwortlich sind) auf den erkennbaren räumlichen Frequenzbereich des optischen Systems heruntermoduliert. Durch die Computerrekonstruktion können Bilder von Proben mit einer räumlichen Auflösung jenseits der Beugungsgrenze erhalten werden.

Typische SIM-Methoden strukturieren jedoch nur die Intensitätsverteilung der Beleuchtung. Daher kann die typische SIM nicht die Polarisierungsrichtung (Händigkeit) chiraler Domänen in der chiralen Probe unterscheiden.

WO 2005047849 A3 offenbart eine Vorrichtung und ein Verfahren, die ein neues Vier-Port-Dual-Source-Interferometer mit Doppelmodulations-FT-VCD- oder FT-VLD-Messungen kombinieren, um ein Spektrometer mit verbesserter Signalqualität (S / N) und geringerer Suszeptibilität zur Detektorsättigung zu erhalten. In dieser Vorrichtung wird ein linearer Polarisator oder eine Tandemanordnung von identisch ausgerichteten Polarisatoren vor jeder der beiden Quellen in einem Vier-Port-Dual-Source-Interferometer mit dem Polarisationszustand eines der linearen Polarisatoren angeordnet (oder Tandemarray von Polarisatoren) vertikal und der Polarisationszustand des anderen linearen Polarisators (oder Tandemarray von Polarisatoren) horizontal, d.h. mit den Polarisationsachsen der Polarisatoren orthogonal zueinander angeordnet. Der Nachteil dieser technischen Lösung besteht darin, dass eine Kombination eines Vier-Port-Dualquellen-Interferometers mit doppelmoduliertem Fourier-Transformations-Dichroismus (FT-VCD) oder FT-VLD-Messungen erfolgt, um ein Spektrometer mit verbesserter Signalqualität (S/N) und geringerer Anfälligkeit für Detektorsättigung zu erhalten, so dass keine Bildgebung mit räumlicher Auflösung von chiralen Proben möglich ist.

WO 2007088947 A1 offenbart ein Zirkulardichroismus-Fluoreszenzmikroskop bei dem ein Lichtstrahl von einer Lichtquelle durch einen Zirkularpolarisations- / Modulationsabschnitt geleitet wird, um rechts und links zirkular polarisierte Lichtstrahlen zu erzeugen. Eine Probe wird mit rechts und links zirkular polarisierten Lichtstrahlen bestrahlt, die auf sie fokussiert werden, wobei die von der Probe abgestrahlte Fluoreszenz durch eine optische Linse fokussiert wird, nur Fluoreszenz mit einer vorbestimmten Wellenlänge durch einen Wellenlängenauswahlabschnitt übertragen wird und dabei die durchgelassene Fluoreszenz detektiert wird.

Bei diesem Zirkulardichroismus-Fluoreszenzmikroskop wird der Intensitätsunterschied zwischen der von der Probe ausgestrahlten Fluoreszenz bei Bestrahlung mit rechtszirkular polarisiertem Licht und der von der Probe ausgestrahlten Fluoreszenz bei Bestrahlung mit linkszirkular polarisiertem Licht auf der Grundlage eines Fluoreszenzintensitätssignals berechnet.

Der Nachteil dieser technischen Lösung besteht darin, dass eine Messung der Differenz in der Fluoreszenzintensität, die von der Probe abgestrahlt wird, wenn sie mit RCP- und LCP-Licht, d.h. FDCD, bestrahlt wird erfolgt, um die Struktur hoher Ordnung einer Probe eines biologischen Moleküls direkt aus einer kleinen Menge Probe zu analysieren, so dass keine Bildgebung mit räumlicher Auflösung von chiralen Proben möglich ist.

EP 3 133 385 A1 offenbart eine Anordnung, welche mindestens zwei chirale Objekte umfasst, wobei die chiralen Objekte eng beieinander liegend sind, ein erstes chirales Objekt für das Streuen und/oder Absorbieren einer ersten Polarisation ausgelegt ist und die Richtung eines einfallenden elektromagnetischen Feldes in einer Weise gestaltet ist, dass ein elektromagnetisches Feld gestreut wird, wobei das erste chirale Objekt nur die erste Polarisationsrichtung umfasst und für eine zweite Polarisationsrichtung des einfallenden elektromagnetischen Feldes transparent ist, wobei ein zweites chirales Objekt zum Streuen und/oder Absorbieren der zweiten Polarisationsrichtung des einfallenden elektromagnetischen Signals des Feldes in einer Weise vorgesehen ist, dass das elektromagnetische Feld durch das zweite chirale Objekt nur in der zweite Polarisationsrichtung gestreut wird und dabei für die erste Polarisationsrichtung transparent ist.

Der Nachteil dieser technischen Lösung besteht darin, dass diese Anordnung der beiden chiralen Objekte lediglich den Kontrast des zirkularen Dichroismus erhöht, so dass keine Bildgebung mit hoher räumlicher Auflösung von chiralen Proben möglich ist.

WO 2009105250 A3 offenbart ein Verfahren und eine Anordnung zum nicht-invasiven Messen von Kollagen- und Kollagen-Basislinien-änderungen während der Behandlung von Gewebe, z. B. Denaturierung durch Anwendung von HF-Energie durch linearen Dichroismus, zirkularen Dichroismus oder Doppelbrechung.

Diese technische Lösung verwendet wahlweise polarisationsempfindliche optische Messungen, um zwischen der Denaturierung von unidirektional orientierten Kollagensträngen, wie einem Band oder einer Sehne, und der Denaturierung von ebenen Kollagenoberflächen, wie der Hautschicht oder Kollagen in Gelenkkapseln, zu unterscheiden.

Der Nachteil dieser technischen Lösung besteht darin, dass diese nichtinvasive Echtzeit-Überwachung der Gewebebehandlung durch LD, CD oder Doppelbrechung erfolgt, so dass keine Bildgebung mit räumlicher Auflösung von chiralen Proben möglich ist.

WO 2012127273 A1 offenbart eine Anordung und ein Verfahren zum Erfassen von chiralen Eigenschaften von Materialien und zum Trennen von Materialien basierend auf ihren chiralen Eigenschaften. Dabei wird ein chiraler Vektor aus den Anisotropieeigenschaften eines polarisationsabhängigen Ausgangssignals einer Probe konstruiert, wobei verschiedene Arten von Molekülen aus der Probe basierend auf einer Größe des chiralen Vektors unterschieden werden können. Die chiralen Eigenschaften der Probe können hierbei basierend auf einem Winkel des chiralen Vektors erfasst werden. Das Ausgangssignal kann bei dieser technischen Lösung eine Fluoreszenzemission von der Probe sein, die verwendet wird, um die chiralen Eigenschaften einer im Wesentlichen kompakten Probe zu erfassen.

Der Nachteil dieser technischen Lösung besteht darin, dass ein chiraler Vektor aus den Anisotropieeigenschaften eines polarisationsabhängigen Ausgangssignals aus einer Probe aufgebaut wird, um verschiedene Arten von Molekülen in einer Probe unterschieden zu können, wobei keine Bildgebung mit hoher räumlicher Auflösung von chiralen Proben möglich ist.

G.-Y. ZHUO ET AL: "Three-dimensional structural imaging of starch granules by second-harmonic generation circular dichroism: SHG-CD IMAGING OF STARCH, JOURNAL OF MICROSCOPY, Bd. 253, Nr. 3, 1. März 2014, Seiten 183-190 offenbart eine Mikroskopievorrichtung und ein Mikroskopieverfahren mit einer Lichtquelle, einer Aufnahmevorrichtung für ein Stärkekorn in der Probenebene und eine Bildaufnahmevorrichtung, wobei die Anordnung eine chirale Strukturierungsvorrichtung für Licht umfasst, die sich zwischen der Lichtquelle und der Probenebene befindet, so dass eine dreidimensionale Strukturdarstellung von Stärkekörnern durch den Zirkulardichroismus der zweiten harmonischen Generation möglich ist.

US 2013/068967 A1 offenbart ein Verfahren und ein Mikroskop zur Erzeugung eines mikroskopischen Bildes, wobei
a) die Probe jeweils durch das Mikroskopobjektiv nach dem TIRF-Verfahren beleuchtet wird und
b) die Probe strukturiert in unterschiedlichen Verschiebepositionen der Struktur beleuchtet wird.

Das Probenlicht des Verfahrens nach a) und b) wird dabei jeweils zur Erzeugung eines Bildes von mindestens einem Probenbereich detektiert, wobei die nach a) und b) erzeugten Probenbilder miteinander verrechnet, vorzugsweise multipliziert, werden und das Ergebnis zur Erzeugung eines neuen Probenbildes gespeichert wird.

WO 2018/015950 A1 offenbart ein System mit einem Dielektrikum, das so konfiguriert ist, dass es:
a) ein biperiodisches Interferenzmuster zweier stehender Sinuswellen bei Beleuchtung durch zwei Paare gegenläufiger Lichtstrahlen bei unterschiedlichen Einfallswinkeln erzeugt, wobei die Einfallswinkel in Übereinstimmung mit dem Brechungsindex des Dielektrikums ausgewählt werden, um
   i) die räumliche Frequenz jedes gegenläufigen Lichtwellenpaares zu bestimmen und
   ii) eine interne Totalreflexion zu bewirken, und
b) aus dem biperiodischen Interferenzmuster eine evaneszente biperiodische stehende Sinuswelle zu erzeugt,
wobei eine Lichtquelle, so konfiguriert ist, dass sie das Dielektrikum mit den beiden Paaren gegenläufiger sinusförmiger Lichtwellen bei den ausgewählten Einfallswinkeln beleuchtet und dadurch ein fluoreszierendes Objekt, das an der Oberfläche des Dielektrikums positioniert ist, mit der erzeugten bi-periodischen, evaneszenten, stehenden Sinuswelle beleuchtet und wobei eine oder mehrere Verzögerungsleitungen, die so konfiguriert sind, dass sie die Anfangsphase jedes gegenläufigen Lichtwellenpaares unabhängig voneinander modifizieren, vorgesehen sind.

US 2008/210868 A1 offenbart die Analyse der Verteilung der Chiralität in der molekularen Struktur eines Proteins und die holographische Beobachtung der Struktur der magnetischen Domäne mit einer hohen Auflösung von weniger als 10 nm vermittels eines Transmissionselektronenmikroskops, das mit einer Quelle für spinpolarisierte Elektronen ausgestattet ist, wobei sich die Phase der Übertragung spinpolarisierter Elektronen aufgrund des Vorhandenseins einer Chiralitätsstruktur oder Magnetisierung in einer Probe ändert, was als Interferenzmuster-Phasenverschiebung bei der Holographie-Messung beobachtet wird.

Die Aufgabe der vorliegenden Erfindung besteht darin, eine Mikroskopieanordnung und ein Mikroskopieverfahren zur Abbildung chiraler Proben anzugeben, welche die zuvor stehend genannten Nachteile des Standes der Technik nicht aufweisen, insbesondere eine strukturierte Beleuchtungsmikroskopie (SIM) für chirale Proben zu ermöglichen, um chirale Domänen mit Subwellenlängen-Superauflösung unterhalb des Abbe-Limits schnell abzubilden.

Erfindungsgemäß wird diese Aufgabe durch die Merkmale des 1. und 9. Patentanspruchs gelöst. Weitere günstige Ausgestaltungsmöglichkeiten der Erfindung sind in den nachgeordneten Patentansprüchen angegeben.

Das Wesen der Erfindung besteht darin, dass durch die Mikroskopieanordnung und das Mikroskopieverfahren zur Abbildung chiraler Proben die optische Chiralität der Beleuchtung strukturiert wird, in dem optische Chiralitätstechnik und strukturierte Beleuchtungsmikroskopie eingesetzt werden, um eine weiträumige, hochauflösende chirale Bildgebung durch die Nutzung und Auswertung der optischen Vergrößerung durch den Moiré-Effekt zu erreichen.

Die optische Chiralität der Beleuchtung ist dabei die physikalische Größe, die für die chiralitätsabhängige differentielle Absorption (d.h. den zirkularen Dichroismus) von Licht durch chirale Stoffe verantwortlich ist.

Es wird die optische Chiralität der Beleuchtung strukturiert, wobei Probenmoleküle durch die Beleuchtung mit einer strukturierten optischen Chiralität mit einer geringen Intensität bestrahlt werden, so dass diese Moleküle je nach Chiralität unterschiedlich intensiv Strahlung emittieren. Durch die Überlagerung der optischen Chiralitätsstrukturbeleuchtung und der Verteilung der chiralen Domänen werden Muster erzeugt, welche zur Abbildung genutzt werden, in dem die Ausrichtung und die Phase des emittierten optischen chiralen Musters gescannt wird und alle so gewonnenen Rohbilder zur Bildrekonstruktion an einen Computer geschickt werden. Der durch die Überlagerung der chiralen Struktur der Probe und der chiralen Struktur der Beleuchtung hervorgerufene Moiré-Effekt wird als Vergrößerung der chiralen Struktur der Probe sichtbar. Die Aufnahmen mehrere Bilder mit unterschiedlichen Kombinationen aus Ausrichtung, Lage und Mittenabständen der chiralen Struktur der Beleuchtung werden mittels einer Bildbearbeitungssoftware in einem Computer zu einem Ergebnisbild der Probe mit einer höheren Auflösung der chiralen Domänen ermittelt als die Auflösung, die durch das Abbè-Limit beziehungsweise die Beugungsgrenze vorgegeben ist und unterhalb der Wellenlänge liegt.

Der Vorteil dieser technischen Lösung besteht darin, dass sie eine schnelle und hochauflösende mikroskopische Methode bietet, um die chiralen Domänen mit subwellenlängenräumlicher Auflösung abzubilden.

Die Mikroskopieanordnung und das Mikroskopieverfahren können als spezielle strukturierte Beleuchtungsmikroskopie (SIM) bei der Erforschung verschiedenster chiraler biologischer Objekte, wie bspw. Kollagen und DNA, verwendet werden und können verschiedenste Anwendungen in den Bereichen Wirkstoffdesign, Makromoleküle, chirale anorganische Nanostrukturen und plasmonale Metamaterialien finden.

So sind die Mikroskopieanordnung und das Mikroskopieverfahren bspw. für Untersuchungen der subzellulären Proteinfaltung geeignet, um wichtige Informationen für die Pathogenese neurodegenerativer Erkrankungen zu erhalten.

Durch diese technische Lösung der strukturierten Beleuchtungsmikroskopie (SIM) für chirale Proben ist es möglich, chirale Domänen mit Subwellenlängen-Superauflösung schnell abzubilden.

Die Erfindung wird nachstehend an Hand der Figuren und der Ausführungsbeispiele näher erläutert, ohne auf diese Beispiele beschränkt zu werden.

Die erfindungsgemäße Mikroskopieanordnung umfasst eine Lichtquelle für Licht, eine chirale Strukturierungsvorrichtung für Licht, eine Aufnahmevorrichtung für eine Probe in der Probenebene und Bildaufnahmevorrichtung.

Der Aufbau einer Mikroskopieanordnung an sich ist bekannt. Insbesondere ist bekannt, dass bei der Mikroskopie eine Lichtquelle vorhanden ist, die so angeordnet ist, dass mit deren Licht die Probe beleuchtet wird. Das von der Probe ausgehende Licht wird von der Bildaufnahmevorrichtung aufgenommen. Auf dem Weg des Lichtes von der Lichtquelle zur Probenebene können zusätzlich eine oder mehrere Linsen oder optisches Systeme, räumliche Lichtmodulatoren (spatial light modulator) und halbdurchlässige Spiegel angeordnet sein. Über eine datenleitende Verbindung kann die Bildaufnahmevorrichtung mit einem Computer verbunden sein, in dem eine Bildverarbeitung stattfindet.

Das Wesen der Erfindung besteht darin, dass sich in dem Verlauf des Lichtes von der Lichtquelle zur Probenebene eine chirale Strukturierungsvorrichtung befindet. Dadurch wird das Licht in der Probenebene in abwechselnd links- und rechtszirkularpolarisierte Lichtbereiche strukturiert. Von dieser technischen Lösung sind alle Formen von Lichtbereichen umfasst, beispielsweise Streifen, Punkte, Rechtecke, Dreiecke und Wellenlinien.

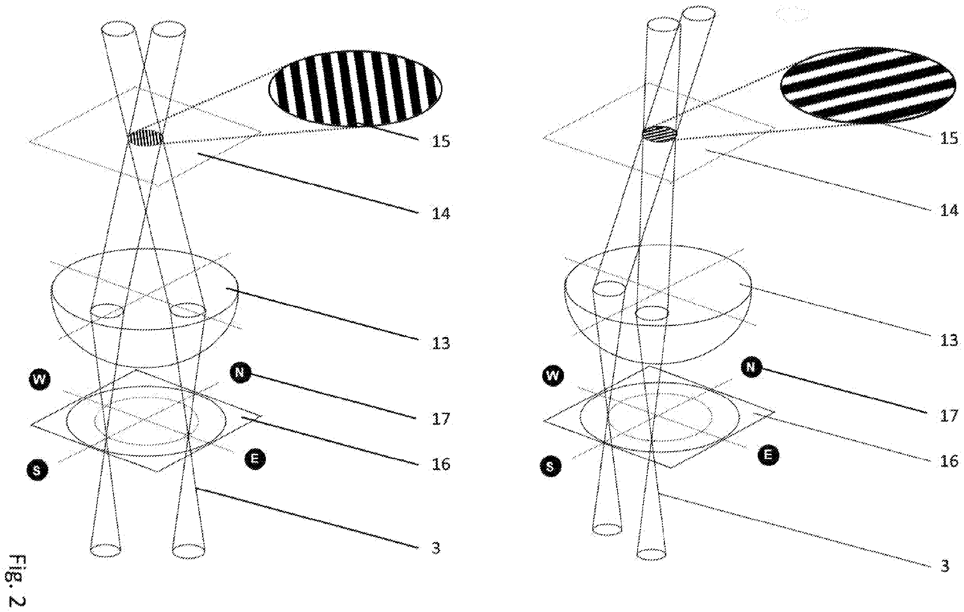

Die in den Fig. 2 bis 4 beispielhaft gezeigten Lichtstreifen sind so zu verstehen, dass die weißen Streifen eine zirkulare Polarisierungsorientierung und die schwarzen Streifen die andere, entgegengesetzte Polarisierungsorientierung darstellen.

Grundsätzlich kann jede chirale Strukturierungsvorrichtung eingesetzt werden, die abwechselnd links- und rechtszirkularpolarisierte Lichtbereiche in der Probenebene erzeugt.

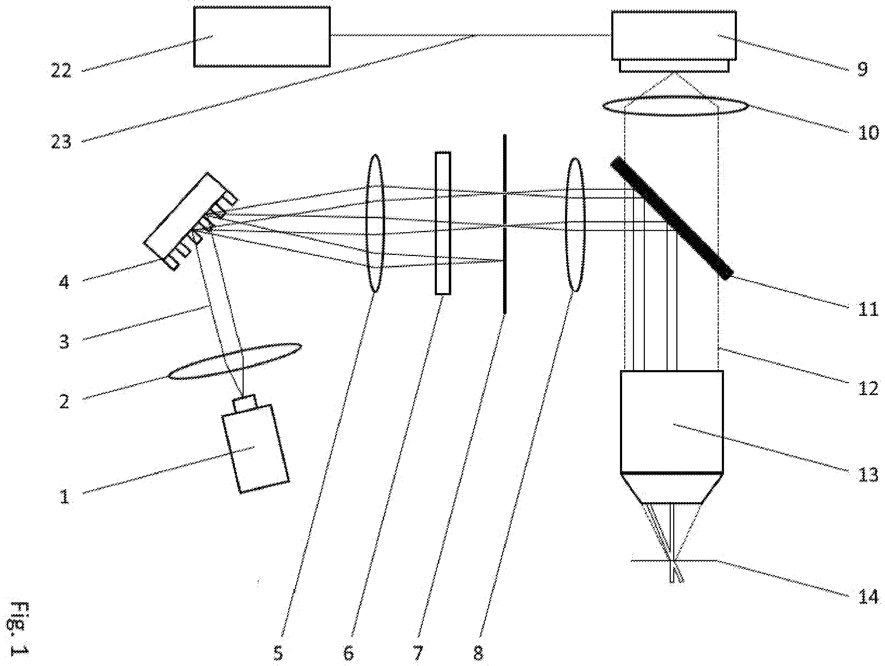

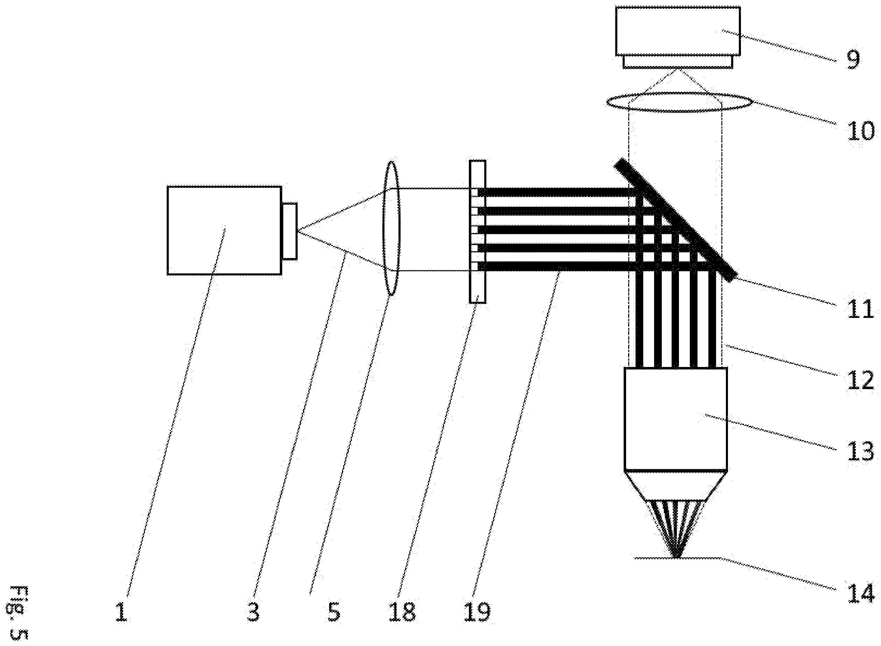

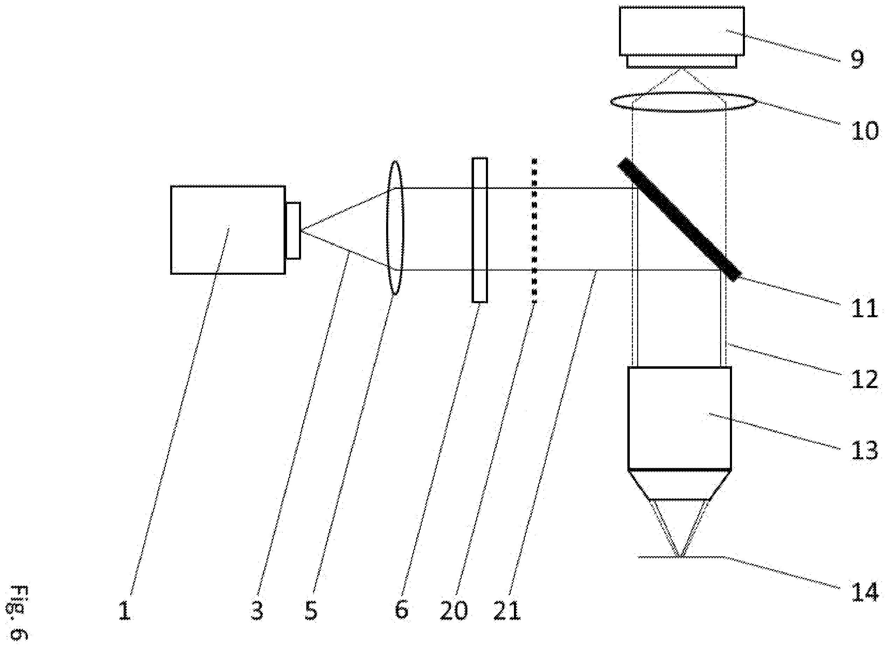

Beispielhaft sei der Einsatz
- eines azimutaler Polarisationsfilter (Fig. 1) mit Interferenzen in der Probenebene
- strukturierter azimutalen Polarisierungsfilter (Fig. 5)
- eines Beugungsgitters (Fig. 6)
aufgezeigt.

Fig. 1 zeigt eine Mikroskopieanordnung mit einer chiralen Strukturierungsvorrichtung, die einen azimutalen Polarisierungsfilter, eine Maske und ein Objektiv umfasst, wobei diese so angeordnet sind, dass das Licht der Lichtquelle zuerst den Polarisierungsfilter, nachfolgend die Maske und nachfolgend das Objektiv passiert, wobei die Maske mindestens zwei Öffnungen aufweist.

Vorteilhaft ist der Einsatz eines räumlichen Lichtmodulators (spatial light modulator) zur Anpassung des Lichtes von der Lichtquelle, so dass das Licht in kohärente Lichtbündel aufteilt werden kann.

Durch das Objektiv werden die Lichtbündel so ausgerichtet, dass sie sich in der Probenebene überlagern und interferieren. Werden, wie in den Figuren 1 bis 4 gezeigt, zwei Lichtbündel übereinander gelegt, ergibt das Interferenzbild ein Streifenmuster. Werden mehr als zwei Lichtbündel übereinander gelegt, entstehen andere Formen der abwechselnd links- und rechtszirkular orientierten Lichtbereiche, beispielsweise Punkte.

Fig. 5 zeigt eine Mikroskopieanordnung mit einer chiralen Strukturierungsvorrichtung, die einen strukturierten azimutalen Polarisierungsfilter, der nebeneinanderliegende Filterbereiche mit abwechselnd links- und rechtszirkularer Orientierung aufweist, und ein Objektiv umfasst. Realisiert werden kann ein solcher Filter beispielsweise als plasmonische Nanostruktur. Nach dem Verlassen des Polarisationsfilters wird das chiral strukturierte Licht auf die Probenebene gelenkt.

Fig. 6 zeigt eine Mikroskopieanordnung mit einer chiralen Strukturierungsvorrichtung, die einen azimutalen Polarisierungsfilter, ein Beugungsgitter und ein Objektiv umfasst. Nach dem Verlassen des Polarisationsfilters passiert das Licht das Beugungsgitter. Hinter dem Beugungsgitter erfolgen Interferenzen, wodurch das Licht chiral strukturiert wird.

Die Ausrichtung, die Lage, die chirale Orientierung und/oder der Mittenabstand der chiral strukturierten Lichtbereiche, beispielsweise Lichtstreifen oder Lichtpunkte sind in Bezug zur Probe in der Probeneben veränderbar.

Die Veränderung der Ausrichtung kann bei Verwendung einer Vorrichtung nach Fig. 1 beispielsweise durch
- eine Veränderung der Maske (7) erfolgt, so dass das Licht (3) durch andere Öffnungen verläuft, oder
- einen Austausch der Maske gegen eine andere Maske oder
- eine Drehung der Maske erfolgen, so dass die Öffnungen der Masken ihre Lage ändern, oder
- eine Drehung der Probe in der Probenebene
erfolgen.

Fig. 2 zeigt eine Änderung der Ausrichtung der Lichtstreifen (15) durch eine Lageänderung der Maskenöffnungen. Diese ändern ihre Lage von den Richtungen E und S zu SE und SW um 60 Grad. Die Änderung der Ausrichtung der Lichtstreifen (15) ändert sich ebenfalls um 60 Grad.

Die Veränderung der Lage kann beispielsweise durch
- eine Verschieben der Probe in der Probenebene (14) oder
- eine Lageveränderung einer optischen Baugruppe, beispielswiese ein Neigen des halbdurchlässigen Spiegels (11)
erfolgen.

Fig. 4 zeigt eine Änderung der Lage der Lichtstreifen (15) durch eine Lageänderung der Probe in der Probenebene (14). Die Änderung entspricht in diesem Beispiel der Breite eines Lichtstreifens (15), so dass nach der Änderung die chirale Orientierung der Lichtstreifen auf der Probenebene (14) umgekehrt wurde.

Die Veränderung des Mittenabstandes der chiral strukturierten Lichtbereiche kann beispielsweise durch
- die Verwendung anderer Öffnungen in der Maske bei einer Vorrichtung nach Fig. 1,
- eine Änderung der Fokussierung des Objektivs,
- eine Änderung der Neigung des halbdurchlässigen Spiegels erfolgen.

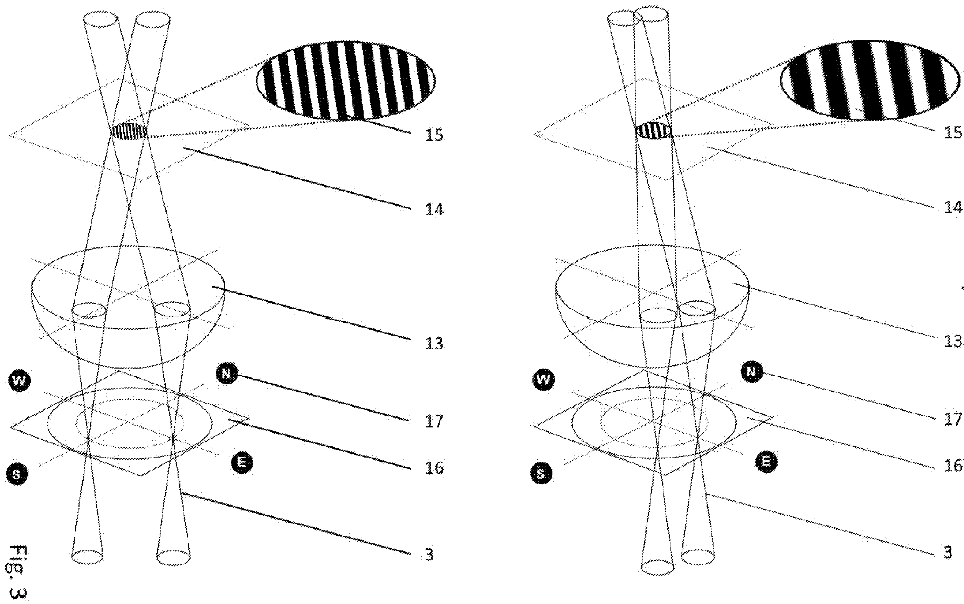

Fig. 3 zeigt eine Änderung des Mittenabstandes der Lichtstreifen durch die Verwendung näher beieinander liegender Öffnungen in der Maske.

Die chiral strukturierten Lichtbereiche der jeweils gleichen zirkularen Polarisierung können einen beliebigen Mittenabstand in der Probenebene zueinander haben. Für eine vorteilhafte Ausbildung des Moiré-Musters liegt der Mittenabstand in der Größenordnung der zu erfassenden Auflösung der chiralen Probe. Vorteilhaft sind Mittenabstände von 10 nm bis 1µm in der Probenebene.

Wird eine chirale Probe mit polarisiertem Licht beleuchtet, so verhalten sich die chiralen Bereiche der Probe je nach deren chiraler Orientierung unterschiedlich insbesondere im Grad
- der Reflektion,
- der Absorption und
- der durch das Licht angeregten Fluoreszenz (Fluoreszenzlicht).

Die Bildaufnahmevorrichtung umfasst mindestens einen Sensor, der das reflektierte Licht, das durch Absorption gedämpfte Licht und/oder das Fluoreszenzlicht aufnimmt. Jeder Sensor kann als Auflichtsensor oder als Durchlichtsensor angeordnet sein.

Grundsätzlich ist jede Art von Bildaufnahmesensoren geeignet, beispielsweise CCD-Kameras.

Vorteilhaft für eine Auswertung mittels eines Computers ist eine Bildaufnahmevorrichtung, bei der das Bild mittels einer datenleitenden Verbindung zu dem Computer übertragen kann.

Für die Aufnahme von Bildern wird das Licht einer Lichtquelle durch eine chirale Strukturierungsvorrichtung auf die Probenebene geleitet, wobei das Licht in der Probenebene in abwechselnd links- und rechtszirkularpolarisierte Lichtbereiche strukturiert ist.

Die Probe in der Probenebene weist ebenfalls eine chirale Strukturierung auf. Chirale Bereiche beider Orientierungen und gegebenenfalls achirale Bereiche befinden sich nebeneinander.

Durch die Überlagerung der chiralen Strukturen des Lichtes und der chiralen Strukturen der Probe entstehen im reflektierten Licht / Fluoreszenzlicht Moiré-Muster. Das von der Probe kommende Licht wird der Bildaufnahmevorrichtung zugeführt und die Moiré-Muster werden als Bild aufgenommen.

Für die Rekonstruktion des Abbildes der chiralen Probe in einem Ergebnisbild werden mehrere Bilder aufgenommen, wobei mindestens zwei unterschiedliche Kombinationen von Ausrichtungen, Lagen, chiraler Orientierung und/oder Mittenabständen der Lichtbereiche für unterschiedliche Aufnahmen verwendet werden. Beispielsweise werden nacheinander drei unterschiedliche Lagen, drei unterschiedliche Ausrichtungen und beide Orientierungen kombiniert, wodurch 18 unterschiedliche Bilder von Moiré-Mustern aufgenommen werden. Die aufgenommenen Bilder werden durch die datenleitende Verbindung an einen Computer übergeben. Das Ergebnisbild kann aus den Bildern der unterschiedlichen Aufnahmen mittels eines Computerprogramms in einem Computer ermittelt werden.

Vorteihaft ist die zusätzliche Aufnahme mindestens eines Bildes der chiralen Probe mit nicht chiral strukturiertem, aber zirkular polarisiertem Licht. Es können ein oder zwei Aufnahmen erfolgen. Wenn zwei Aufnahmen erfolgen, wird zirkular polarisiertes Licht mit jeweils unterschiedlicher Orientierung verwendet. Die Bilder der Aufnahmen gehen in die Ermittlung des Ergebnisbildes ein. Um die Probe mit nicht chiral strukturiertem, aber zirkular polarisiertem Licht zu beleuchten, kann beispielsweise die chirale Strukturierungsvorrichtung aus einer Mikroskopieanordnung mit einem azimutaler Polarisationsfilter bestehen.

Vorteilhaft werden beispielsweise 20 Bilder aufgenommen: 18 Bilder unter chiral strukturiertem zirkularpolarisiertem Licht und zwei Bilder unter nicht chiral strukturiertem, aber zirkularpolarisiertem Licht. Aus den 20 Bildern werden im Computer neun Teilbilder für die weitere Bildrekonstruktion mit der an sich bekannten SIM-Methode erzeugt

Die Verwendung der erfindungsgemäßen Mikroskopieanordung und/oder des erfindungsgemäßen Mikroskopieverfahrens ermöglicht die Abbildung von chiralen Strukturen einer Probe unter Nutzung der Verstärkungswirkung des Moiré-Effektes mit einer höheren Auflösung als der des Abbè-Limits.

Dieses Verfahren kombiniert somit Abläufe der optischen Chiralitätstechnik und Abläufe der strukturierten Beleuchtungsmikroskopie, um eine weiträumige, hochauflösende chirale Bildgebung zu erreichen.

Die räumliche Auflösung eines typischen Lichtmikroskops wird durch die erfassbare Bandbreite der durch das Erfassungsziel bestimmten Ortsfrequenz begrenzt. Um die räumliche Auflösung zu verbessern, verwendet das Verfahren der strukturierten Beleuchtungsmikroskopie (SIM) räumlich strukturiertes Licht, um die Probe zu beleuchten.

Die Überlagerung des Beleuchtungsmusters und der Probenverteilung führt zum Morie-Effekt (Abb. 2), der die hochfrequenten Komponenten (die für feine Merkmale verantwortlich sind) auf den erkennbaren räumlichen Frequenzbereich des optischen Systems heruntermoduliert. Durch die Computerrekonstruktion können Bilder von Proben mit einer räumlichen Auflösung jenseits der Beugungsgrenze erhalten werden. Typische, bisher bekannte SIM-Methoden strukturieren jedoch nur die Intensitätsverteilung der Beleuchtung. Daher kann die typische SIM die Händigkeit chiraler Domänen in der chiralen Probe nicht unterscheiden.

Zur Abbildung chiraler Proben wird nunmehr die optische Chiralität der Beleuchtung strukturiert. Die optische Chiralität der Beleuchtung ist die physikalische Größe, die für die chiralitätsabhängige differentielle Absorption (d.h. den kreisförmigen Dichroismus) von Licht durch chirale Stoffe verantwortlich ist.

Die durch diese technische Lösung in Form einer Mikroskopieanordnung und eines Mikroskopieverfahrens bereitgestellte chirale SIM-Methode erzielt eine hohe räumliche Auflösung, welche wesentlich besser ist, als die bei einem typischen Weitwinkel-CD-Image erzielte Auflösung.

Der Vorteil der Mikroskopieanordnung und des Mikroskopieverfahrens besteht somit darin, dass eine strukturierte Beleuchtungsmikroskopie (SIM) für die Abbildung chirale Proben mit hoher Auflösung ermöglicht wird.

Die Erfindung wird nachfolgend an Hand der Ausführungbeispiele und der Figuren näher erläutert, ohne auf diese beschränkt zu sein. Dabei zeigen:
- Fig. 1:: eine schematische Darstellung einer Ausführungsform der erfindungsgemäßen Mikroskopieanordnung mit chiral strukturierter Beleuchtung mittels eines Polarisationsfilters und einer Maske,
- Fig. 2:: eine schematische Darstellung des Prinzips der chiralen Strukturierung von Licht und deren Veränderung in Bezug auf die Ausrichtung der Lichtstrukturen,
- Fig. 3:: eine schematische Darstellung des Prinzips der chiralen Strukturierung von Licht und deren Veränderung in Bezug auf die Mittenabstände der Lichtstrukturen,

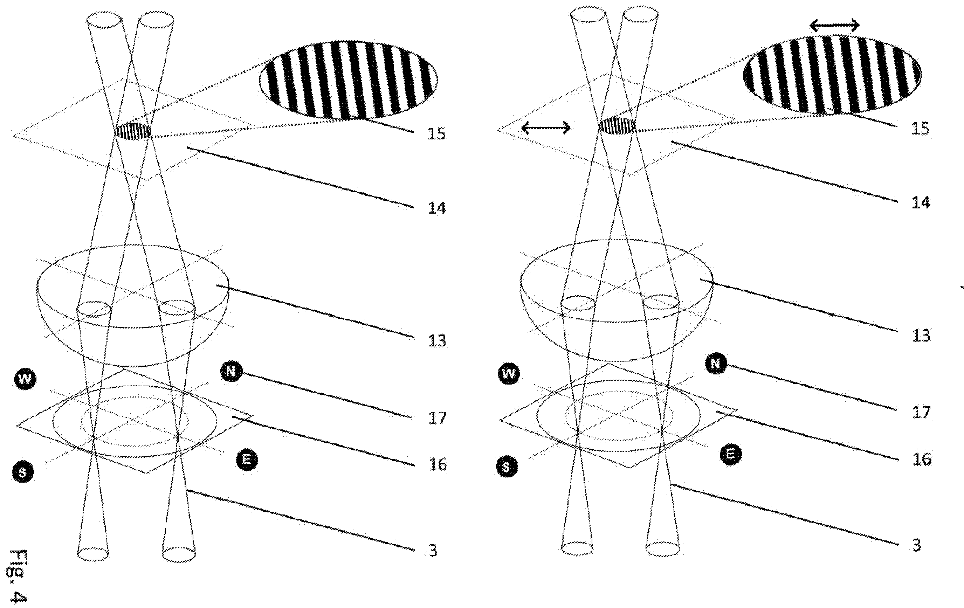

- Fig. 4:: eine schematische Darstellung einer Probenverschiebung,
- Fig. 5:: eine schematische Darstellung einer Ausführungsform der erfindungsgemäßen Mikroskopieanordnung mit chiral strukturierter Beleuchtung mittels eines srtukturierten Polarisationsfilters und
- Fig. 6:: eine schematische Darstellung einer Ausführungsform der erfindungsgemäßen Mikroskopieanordnung mit chiral strukturierter Beleuchtung mittels eines Beugungsgitters.

Die in Fig. 1 dargestellte Ausführungsform der Mikroskopieanordnung umfasst eine Lichtquelle (1) für Licht (3), eine chirale Strukturierungsvorrichtung (6, 7, 13) für Licht, eine Aufnahmevorrichtung für eine Probe in der Probenebene (14) und eine Bildaufnahmevorrichtung (9).

Es ist eine Lichtquelle (1) vorhanden, mit deren Licht die Probe beleuchtet wird. Die Lichtquelle ist ein Laser. Auf dem Weg des Lichtes (3) von der Lichtquelle (1) zur Probenebene (14) sind zusätzlich Linsen (2, 5, 8), ein räumlicher Lichtmodulator (spatial light modulator) (4) und ein halbdurchlässiger Spiegel (11) angeordnet. Das von der Probe ausgehende Licht (3) wird von der Bildaufnahmevorrichtung (9) aufgenommen. Über eine datenleitende Verbindung (23) ist ein Computer (22) mit der Bildaufnahmevorrichtung (9) verbunden sein.

Auf dem Weg des Lichtes (3) von der Lichtquelle (1) zur Probenebene (14) ist die chirale Strukturierungsvorrichtung (6, 7, 13) angeordnet. Dadurch wird das Licht (1) in der Probenebene (14) in abwechselnd links- und rechtszirkularpolarisierte Lichtstreifen strukturiert.

Die chirale Strukturierungsvorrichtung umfasst einen azimutalen Polarisationfilter (6), eine Maske (7) und ein Objektiv (13). Die abwechselnd links- und rechtszirkularpolarisierte Lichtstreifen (19) entstehen in der Probenebene (14) durch Interferenz.

Das von der Probe in der Probenebene (14) reflektierte Licht und das gegebenenfalls emittierte Fluoreszenzlicht werden durch das Objektiv und den halbdurchlässigen Spiegel (11) über eine Linse (10) der Bildaufnahmevorrichtung (9) zugeführt. Die Bildaufnahmevorrichtung (9) ist eine Kamera. Sie ist als Auflichtsensor angeordent. Die Kamera ist mit einer datenleitenden Verbindung (23) mit einem Computer (22) verbunden.

Die in Fig. 5 dargestellte Ausführungsform der Mikroskopieanordnung umfasst eine Lichtquelle (1) für Licht (3), eine chirale Strukturierungsvorrichtung (18, 13) für Licht, eine Aufnahmevorrichtung für eine Probe in der Probenebene (14) und Bildaufnahmevorrichtung (9).

Es ist eine Lichtquelle (1) vorhanden, mit deren Licht die Probe beleuchtet wird. Auf dem Weg des Lichtes (3) von der Lichtquelle (1) zur Probenebene (14) sind zusätzlich eine Linse (5) und ein halbdurchlässiger Spiegel (11) angeordnet. Das von der Probe ausgehende Licht (3) wird von der Bildaufnahmevorrichtung (9) aufgenommen.

Auf dem Weg des Lichtes (3) von der Lichtquelle (1) zur Probenebene (14) ist die chirale Strukturierungsvorrichtung (18, 13) angeordnet. Dadurch wird das Licht (1) in der Probenebene (14) in abwechselnd links- und rechtszirkularpolarisierte Lichtpunkte strukturiert.

Die chirale Strukturierungsvorrichtung umfasst einen strukturierten azimutalen Polarisationfilter (18) und ein Objektiv (13). Das chiral strukturierte Licht (19) entsteht beim Durchgang des Lichtes (3) durch den strukturierten azimutalen Polarisationfilter (18) und wird über den halbdurchlässigen Spiegel (11) und das Objektiv (13) auf die Probenebene (14) geleitet.

Das von der Probe in der Probenebene (14) reflektierte Licht und das gegebenenfalls emittierte Fluoreszenzlicht werden durch das Objektiv (13) und den halbdurchlässigen Spiegel (11) über eine Linse (10) der Bildaufnahmevorrichtung (9) zugeführt. Die Bildaufnahmevorrichtung (9) ist eine Kamera. Sie ist als Auflichtsensor ausgeführt.

Die in Fig. 6 dargestellte Ausführungsform der Mikroskopieanordnung umfasst eine Lichtquelle (1) für Licht (3), eine chirale Strukturierungsvorrichtung (6, 20, 13) für Licht, eine Aufnahmevorrichtung für eine Probe in der Probenebene (14) und Bildaufnahmevorrichtung (9).

Es ist eine Lichtquelle (1) vorhanden, mit deren Licht die Probe beleuchtet wird. Auf dem Weg des Lichtes (3) von der Lichtquelle (1) zur Probenebene (14) sind zusätzlich eine Linse (5) und ein halbdurchlässiger Spiegel (11) angeordnet. Das von der Probe ausgehende Licht (3) wird von der Bildaufnahmevorrichtung (9) aufgenommen.

Auf dem Weg des Lichtes (3) von der Lichtquelle (1) zur Probenebene (14) ist die chirale Strukturierungsvorrichtung (6,20, 13) angeordnet. Dadurch wird das Licht (1) in der Probenebene (14) in abwechselnd links- und rechtszirkularpolarisierte Lichtpunkte strukturiert.

Die chirale Strukturierungsvorrichtung umfasst einen azimutalen Polarisationfilter (6), ein Beugungsgitter (20) und ein Objektiv (13). Das interferierende Licht (21) entsteht beim Durchgang des Lichtes (3) durch das Beugungsgitter und wird über den halbdurchlässigen Spiegel (11) und das Objektiv (13) auf die Probenebene (14) geleitet, wo es abwechselnd links- und rechtszirkularpolarisierte Lichtpunkte bildet.

Das von der Probe in der Probenebene (14) reflektiert Licht und das gegebenenfalls emittierte Fluoreszenzlicht werden durch das Objektiv (13) und den halbdurchlässigen Spiegel (11) über eine Linse (10) der Bildaufnahmevorrichtung (9) zugeführt. Die Bildaufnahmevorrichtung (9) ist eine Kamera. Sie ist als Auflichtsensor ausgeführt.

Bei der Durchführung des erfindungsgemäßen Mikroskopieverfahrens zur Abbildung chiral strukturierter Proben mit polarisiertem Licht wird das Licht (3) einer Lichtquelle (1) durch eine chirale Strukturierungsvorrichtung (6, 7, 13 oder 18, 13 oder 6, 20, 13) auf die Probenebene (14) geleitet, wodurch das Licht in der Probenebene (14) es in abwechselnd links- und rechtszirkularpolarisierte Lichtstreifen (15) oder Lichtpunkte strukturiert ist.

Durch die Überlagerung der chiralen Strukturen des Lichtes (1, 19, 21) und der chiralen Strukturen der Probe in der Probenebene (14) entstehen im reflektierten, gedämpften und/oder Fluoreszenzlicht Moiré-Muster. Das Licht von der Probe wird der Bildaufnahmevorrichtung (9) zugeführt und die Moiré-Muster als Bild aufgenommen.

Für die Rekonstruktion des Abbildes der chiralen Probe in einem Ergebnisbild werden mehrere Bilder aufgenommen, wobei mindestens zwei unterschiedliche Kombinationen von Ausrichtungen, Lagen, chiraler Orientierung und/oder Mittenabständen der Lichtstreifen (15) oder der Lichtpunkte für unterschiedliche Aufnahmen verwendet werden. Beispielsweise werden nacheinander drei unterschiedliche Lagen, drei unterschiedliche Ausrichtungen und beide Orientierungen kombiniert, wodurch 18 unterschiedliche Bilder von Moiré-Mustern aufgenommen. Die aufgenommenen Bilder werden durch die datenleitende Verbindung (23) an einem Computer (22) übergeben. Das Ergebnisbild kann aus den Bildern der unterschiedlichen Aufnahmen mittels eines Computerprogramms in einem Computer (22) ermittelt werden.

Um beispielsweise drei Ausrichtungen der Lichtstreifen (15) zu verwenden, wird die Probe in der Probenebene nach der ersten Aufnahme für jede nachfolgende Aufnahme um jeweils 60 Grad gedreht (Fig. 2). Alternativ können in einer Anordnung nach Fig. 1 andere Öffnungen in der Maske (7) oder eine andere Maske (7) mit anderen Öffnungen verwendet werden oder die Maske gedreht werden.

Um beispielsweise drei Lagen der Lichtstreifen (15) zu verwenden, wird die Probe in der Probenebene (14) nach der ersten Aufnahmen um eine Strecke quer zu den Lichtstreifen (15) verschoben, die einem Drittel des Mittenabstandes der Lichtsteifen gleicher Orientierung entspricht. Haben beispielsweise die linkszirkularpolarisierten Lichtstreifen (15) zueinander eine Mittenabstand von 120 nm, so würde die Probe nach der ersten Aufnahmen für jede nachfolgende Aufnahme um jeweils 40 nm verschoben.

Um die beide Orientierungen der Lichtstreifen zu verwenden, wird die Probe in der Probenebene (14) um eine Strecke quer zu den Lichtstreifen (15) verschoben, die der Hälfte des Mittenabstandes der Lichtsteifen gleicher Orientierung entspricht. Dadurch kehrt sich die Orientierung des Lichtesstreifens um. Orte in der Probenebene (4), die vor der Verschiebung linkszirkularpolarisiert beleuchtet waren, sind danach rechtszirkularpolarisiert beleuchtet.

Vorteihaft ist die zusätzliche Aufnahme mindestens eines Bildes der chiralen Probe mit nicht chiral strukturiertem, aber zirkular polarisiertem Licht. Es können ein oder zwei Aufnahmen erfolgen. Wenn zwei Aufnahmen erfolgen, wird zirkular polarisiertes Licht mit jeweils unterschiedlicher Orientierung verwendet. Die Bilder der Aufnahmen gehen in die Ermittlung des Ergebnisbildes ein. Um die Probe mit nicht chiral strukturiertem, aber zirkular polarisiertem Licht zu beleuchten, wird anstelle der chiralen Strukturierungsvorrichtung (6, 7, 13 oder 18, 13 oder 6, 20, 13) aus der erfindungsgemäßen Mikroskopieanordnung nur ein azimutaler Polarisationsfilter verwendet.

Vorteilhaft werden so beispielsweise 20 Bilder aufgenommen: 18 Bilder unter chiral strukturiertem zirkularpolarisiertem Licht und zwei Bilder unter nicht chiral strukturiertem, aber zirkularpolarisiertem Licht. Aus diesen 20 Bildern werden im Computer neun Teilbilder für die weitere Bildrekonstruktion nach einer typischen SIM-Methode erzeugt.

Alle in der Beschreibung, den Ausführungsbeispielen und den nachfolgenden Ansprüchen dargestellten Merkmale können sowohl einzeln als auch in beliebiger Kombination miteinander erfindungswesentlich sein.

### Bezugszeichen

| | |
|---|---|
| 1 | - Lichtquelle |
| 2 | - Linse |
| 3 | - Licht |
| 4 | - räumlicher Lichtmodulator (spatial light modulator) |
| 5 | - Linse |
| 6 | - azimutaler Polarisationsfilter |
| 7 | - Maske |
| 8 | - Linse |
| 9 | - Bildaufnahmevorrichtung |
| 10 | - Linse |
| 11 | - halbdurchlässiger Spiegel |
| 12 | - Licht, von der Probe kommend |
| 13 | - Objektiv |
| 14 | - Probenebene |
| 15 | - chirale Lichtstruktur |
| 16 | - Fokusebene |
| 17 | - Orientierungmarkierungen |
| 18 | - strukturierter azimutalen Polarisierungsfilter |
| 19 | - chiral strukturiertes Licht |
| 20 | - Beugungsgitter |
| 21 | - interferrierendes Licht |
| 22 | - Computer |
| 23 | - datenleitende Verbindung |

### Abkürzungen

- CPL: zirkular polarisiertes Licht
- CD: zirkulärer Dichroismus
- TPL: Chirale Kartographie der Zwei-Photonen-Lumineszenz
- CD-TL: CD-Mikroskopie mit thermischer Linse
- NSOM: Chirale Nahfeld-Scanning-Mikroskopie
- SHG: Chirale Kartierung
- SIM: strukturierten Beleuchtungsmikroskopie
- RCP: rechts zirkular polarisiert
- LCP: links zirkular polarisiert
- FDCD: fluorescence detected circular dichroism
- OC: Optical Chirality
- SIM: structured illumination microscopy

## Patentansprüche

1. Mikroskopieanordnung umfassend eine Lichtquelle (1), eine Aufnahmevorrichtung für eine Probe in der Probenebene (14) und eine Bildaufnahmevorrichtung (9), wobei die Anordnung eine chirale Strukturierungsvorrichtung (6, 7, 13 oder 18, 13 oder 6, 20, 13) für Licht umfasst, die sich zwischen der Lichtquelle (1) und der Probenebene (14) befindet, **dadurch gekennzeichnet, dass** das Licht (3) der
Lichtquelle (1), das die chirale Strukturierungsvorrichtung (6, 7, 13 oder 18, 13 oder 6, 20, 13) passiert hat, in der Probenebene in abwechselnd links- und rechtszirkularpolarisierte Lichtstreifen (15) strukturiert ist.

2. Mikroskopieanordnung gemäß Anspruch 1, **dadurch gekennzeichnet, dass** die Ausrichtung und/oder die Lage und/oder der Mittenabstand der Lichtstreifen (15) in Bezug zur Probe in der Probenebene (14) veränderbar ist.

3. Mikroskopieanordnung gemäß Anspruch 2, **dadurch gekennzeichnet, dass** die Lichtstreifen (15) der jeweils gleichen zirkularen Polarisierung einen Mittenabstand von 100 nm bis 4 µm in der Probenebene (14) aufweisen.

4. Mikroskopieanordnung gemäß einem der Ansprüche 1 bis 3, **dadurch gekennzeichnet, dass** die chirale Strukturierungsvorrichtung (6, 7, 13) einen azimutalen Polarisierungsfilter (6), eine Maske (7) und ein Objektiv (13) umfasst und diese so angeordnet sind, dass das Licht der Lichtquelle zuerst den Polarisierungsfilter (6), nachfolgend die Maske (7) und nachfolgend das Objektiv (13) passiert, wobei die Maske (7) mindestens zwei Öffnungen aufweist.

5. Mikroskopieanordnung gemäß einem der Ansprüche 1 bis 3, **dadurch gekennzeichnet, dass** die chirale Strukturierungsvorrichtung (18, 13) einen strukturierten azimutalen Polarisierungsfilter (18) und ein Objektiv (13) umfasst, der nebeneinanderliegende Filterbereiche mit abwechselnd links- und rechtszirkularer Orientierung aufweist.

6. Mikroskopieanordnung gemäß einem der Ansprüche 1 bis 3, **dadurch gekennzeichnet, dass** die chirale Strukturierungsvorrichtung (6, 20, 13) einen azimutalen Polarisierungsfilter (6), ein Beugungsgitter und ein Objektiv (13) umfasst.

7. Mikroskopieanordnung gemäß einem der Ansprüche 1 bis 6, **dadurch gekennzeichnet, dass** die Bildaufnahmevorrichtung (9) mindestens einen Sensor umfasst und jeder Sensor als Auflichtsensor oder Durchlichtsensor angeordnet ist.

8. Mikroskopieverfahren zur Abbildung chiral strukturierter Proben mit polarisiertem Licht, wobei das Licht (3) einer Lichtquelle (1) durch eine chirale Strukturierungsvorrichtung (6, 7, 13 oder 18, 13 oder 6, 20, 13) auf die Probenebene (14) geleitet wird, **dadurch gekennzeichnet, dass** es in der Probenebene (14) in abwechselnd links- und rechtszirkularpolarisierte Lichtstreifen (15) oder Lichtpunkte strukturiert ist.

9. Mikroskopieverfahren gemäß Anspruch 8, **dadurch gekennzeichnet, dass** mehrere Bilder mittels mindestens eines Sensors aufgenommen werden, wobei mindestens zwei unterschiedliche Kombinationen von Ausrichtungen, Lagen, chiraler Orientierung und/oder Mittenabständen der Lichtstreifen (15) oder Lichtpunkte für unterschiedliche Aufnahmen verwendet werden und ein Ergebnisbild aus den Aufnahmen mittels eines Computerprogramms in einem Computer (22) ermittelt wird.

10. Mikroskopieverfahren gemäß Anspruch 8 oder 9, **dadurch gekennzeichnet, dass** zusätzlich mindestens ein Bild mit nicht chiral strukturiertem, aber zirkular polarisiertem Licht aufgenommen wird und in die Ermittlung des Ergebnisbildes eingeht.

11. Verwendung einer Mikroskopieanordung gemäß einem oder mehrerer der Ansprüche 1 bis 7 oder eines Mikroskopieverfahrens gemäß einem oder mehrerer der Ansprüche 8 bis 10, **dadurch gekennzeichnet, dass** chirale Strukturen einer Probe unter Nutzung der Verstärkungswirkung des Moiré-Effektes mit einer höheren Auflösung abgebildet werden als der des Abbè-Limits.

## Claims

1. A microscopy arrangement comprising a light source (1), a pick-up device for a sample in the sample plane (14) and an image pick-up device (9), the arrangement comprising a chiral structuring device (6, 7, 13 or 18, 13 or 6, 20, 13) for light, which is located between the light source (1) and the sample plane (14), **characterised in that** the light (3) from the light source (1), which has passed the chiral structuring device (6, 7, 13 or 18, 13 or 6, 20, 13), is structured in the sample plane into alternately left- and right-circularly polarised light strips (15).

2. Microscopy arrangement according to claim 1, **characterised in that** the alignment and/or the position and/or the centre-to-centre distance of the light strips (15) in relation to the sample in the sample plane (14) can be varied.

3. Microscopy arrangement according to claim 2, **characterised in that** the light strips (15) of the same circular polarisation in each case have a centre-to-centre distance of 100 nm to 4 µm in the sample plane (14).

4. Microscopy arrangement according to one of claims 1 to 3, **characterised in that** the chiral structuring device (6, 7, 13) comprises an azimuthal polarisation filter (6), a mask (7) and an objective (13) and these are arranged in such a way that the light from the light source first passes the polarisation filter (6), then the mask (7) and then the objective (13), the mask (7) having at least two openings.

5. Microscopy arrangement according to any one of claims 1 to 3, **characterised in that** the chiral structuring device (18, 13) comprises a structured azimuthal polarisation filter (18) and an objective (13) having adjacent filter regions with alternating left and right circular orientations.

6. Microscopy arrangement according to one of claims 1 to 3, **characterised in that** the chiral structuring device (6, 20, 13) comprises an azimuthal polarisation filter (6), a diffraction grating and an objective (13).

7. Microscopy arrangement according to one of claims 1 to 6, **characterised in that** the image recording device (9) comprises at least one sensor and each sensor is arranged as an incident light sensor or transmitted light sensor.

8. Microscopy method for imaging chirally structured samples with polarised light, wherein the light (3) from a light source (1) is directed through a chiral structuring device (6, 7, 13 or 18, 13 or 6, 20, 13) onto the sample plane (14), **characterised in that** it is structured in the sample plane (14) into alternately left- and right-circularly polarised light strips (15) or light spots.

9. Microscopy method according to claim 8, **characterised in that** a plurality of images are recorded by means of at least one sensor, at least two different combinations of orientations, positions, chiral orientation and/or centre-to-centre distances of the light strips (15) or light spots being used for different recordings and a result image being determined from the recordings by means of a computer program in a computer (22).

10. Microscopy method according to claim 8 or 9, **characterised in that** in addition at least one image is taken with non-chirally structured but circularly polarised light and is included in the determination of the result image.

11. Use of a microscopy arrangement according to one or more of claims 1 to 7 or of a microscopy method according to one or more of claims 8 to 10, **characterised in that** chiral structures of a sample are imaged with a higher resolution than that of the Abbè limit using the amplification effect of the moiré effect.

## Revendications

1. Dispositif de microscopie comprenant une source de lumière (1), un dispositif de prise de vue pour un échantillon dans le plan de l'échantillon (14) et un dispositif de prise de vue (9), l'ensemble comprenant un dispositif de structuration chiral (6, 7, 13 ou 18, 13 ou 6, 20, 13) pour la lumière, qui se trouve entre la source de lumière (1) et le plan de l'échantillon (14), **caractérisé en ce que** la lumière (3) de la source de lumière (1), qui est passée par le dispositif de structuration chiral (6, 7, 13 ou 18, 13 ou 6, 20, 13), est structurée dans le plan de l'échantillon en bandes de lumière (15) polarisées circulairement alternativement à gauche et à droite.

2. Dispositif de microscopie selon la revendication 1, **caractérisé en ce que** l'orientation et/ou la position et/ou l'écartement des centres des bandes lumineuses (15) par rapport à l'échantillon dans le plan de l'échantillon (14) est modifiable.

3. Dispositif de microscopie selon la revendication 2, **caractérisé en ce que** les bandes lumineuses (15) de la même polarisation circulaire respective présentent un espacement central de 100 nm à 4 µm dans l'échantillon (14).

4. Dispositif de microscopie selon l'une des revendications 1 à 3, **caractérisé en ce que** le dispositif de structuration chiral (6, 7, 13) comprend un filtre de polarisation azimutale (6), un masque (7) et un objectif (13) et que ceux-ci sont disposés de telle sorte que la lumière de la source lumineuse passe d'abord par le filtre de polarisation (6), ensuite par le masque (7) et ensuite par l'objectif (13), le masque (7) présentant au moins deux ouvertures.

5. Dispositif de microscopie selon l'une des revendications 1 à 3, **caractérisé en ce que** le dispositif de structuration chiral (18, 13) comprend un filtre de polarisation azimutale structuré (18) et un objectif (13) présentant des zones de filtrage juxtaposées avec une orientation circulaire gauche et droite alternée.

6. Dispositif de microscopie selon l'une des revendications 1 à 3, **caractérisé en ce que** le dispositif de structuration chiral (6, 20, 13) comprend un filtre de polarisation azimutale (6), un réseau de diffraction et un objectif (13).

7. Dispositif de microscopie selon l'une des revendications 1 à 6, **caractérisé en ce que** le dispositif de prise de vue (9) comprend au moins un capteur et chaque capteur est agencé comme un capteur de lumière incidente ou un capteur de lumière transmise.

8. Procédé de microscopie pour l'imagerie d'échantillons structurés chiraux avec de la lumière polarisée, dans lequel la lumière (3) d'une source de lumière (1) est dirigée sur le plan de l'échantillon (14) par un dispositif de structuration chiral (6, 7, 13 ou 18, 13 ou 6, 20, 13), **caractérisé en ce qu'**elle est structurée dans le plan de l'échantillon (14) en bandes de lumière (15) ou en points lumineux polarisés circulairement à gauche et à droite en alternance.

9. Procédé de microscopie selon la revendication 8, **caractérisé en ce que** plusieurs images sont prises au moyen d'au moins un capteur, au moins deux combinaisons différentes d'orientations, de positions, d'orientation chirale et/ou d'espacements centraux des bandes lumineuses (15) ou des points lumineux étant utilisées pour différentes prises de vue et une image résultante étant déterminée à partir des prises de vue au moyen d'un programme informatique dans un ordinateur (22).

10. Procédé de microscopie selon la revendication 8 ou 9, **caractérisé en ce que**, en outre, au moins une image est prise avec une lumière non structurée chiralement mais polarisée circulairement et est prise en compte dans la détermination de l'image résultante.

11. Utilisation d'un dispositif de microscopie selon une ou plusieurs des revendications 1 à 7 ou d'un procédé de microscopie selon une ou plusieurs des revendications 8 à 10, **caractérisée en ce que** les structures chirales d'un échantillon sont représentées avec une résolution supérieure à celle de la limite d'Abbè en utilisant l'effet d'amplification de l'effet de moiré.
